# EUROPEAN PATENT SPECIFICATION

(11) **EP 3 619 799 B1**
(45) Date of publication and mention of the grant of the patent: **04.06.2025**
(21) Application number: 18718147.4
(22) Date of filing: 16.04.2018
(51) Int. Cl.: H02K 29/03, H02K 1/27, H02K 3/04, H02K 3/47, H02K 1/14

(54) **ELECTRIC SYNCHRONOUS MOTOR**
ELEKTRISCHER SYNCHRONMOTOR
MOTEUR SYNCHRONE ÉLECTRIQUE

(30) Priority: 03.05.2017 SE 1730124
(43) Date of publication of application: 11.03.2020
(73) Proprietor: Atlas Copco Industrial Technique AB, 105 23 Stockholm (SE)
(72) Inventor: MILLINGER, Jonas, Gustav, 120 53 Årsta (SE)
(74) Representative: Hagström, Åsa Charlotta
(86) International application number: PCT/EP2018/059634
(87) International publication number: WO 2018/202410

(56) References cited:
- EP-A1- 2 135 567
- WO-A1-02/15229
- WO-A1-2011/007694
- JP-A- 2009 027 849
- JP-B2- 5 248 751

## Description

### Technical field

The invention relates to an electric synchronous motor. In particular the invention relates to an electric synchronous motor for power tools that is less complex to manufacture.

### Background

Slotless electrical permanent magnet synchronous motors, in contrast to their slotted counterparts, can operate at high rotational speeds. High speed operation result not only in high efficiency and power density, but low weight as well. Therefore, slotless permanent magnet machines are preferred in industrial power tools.

The conventional way of making a slotless motor for such an application is to use a 2-pole rotor inside a tubular stator yoke, which internally carries a three-phase winding comprising three coils. The commonly used winding configuration is the so-called "overlapping winding technique", characterized by overlapping of the end-windings in a complex manner.

Particularly, the combination of an overlapping winding technique and a slotless stator design results in a very complex assembly process.

Hence, there exists a need for an improved slotless electrical motor to be used in an electrical power tool.

WO 2011/007694 A1, JP 2009 027849 A, WO 02/15229 A1 and JP 5 248751 B2 disclose electric motors with tubular rotors with slotless stators with concentrically wound coils assembled in a non-overlapping fashion.

### Summary

It is an object of the invention to provide an improved slotless electrical motor to be used in an electrical power tool.

This object is achieved in accordance with an aspect of the disclosure by an electric synchronous motor, according to claim 1, for an electrical power tool. The electric synchronous motor comprises a tubular rotor magnetized to have circumferential polar alternations. The electric synchronous motor further comprises a tubular slotless stator yoke of ferromagnetic material. The tubular rotor is magnetized to have two pairs of circumferential polar alternations and the stator comprises three concentrically wound coils. The three concentrically wound coils are assembled in a non-overlapping fashion inside the tubular stator yoke to form a concentrated motor winding.

An advantage with the exemplary embodiments of the disclosure is that manufacturing costs can be significantly reduced since the three concentrically wound coils can be inserted individually in a non-overlapping fashion called the "concentrated winding technique".

By using the so-called "concentrated winding technique", characterized by non-overlapping end-windings, the assembly process can be significantly simplified, with higher quality and reduced costs as consequence.

However, such a winding technique often result in reduced performance and unacceptable levels of vibrations and noise. This is the case for the case for the 2-pole rotor in combination with a stator deploying the said concentrated winding technique.

One aspect of the present disclosure relates to the design of an electrical permanent magnet synchronous motor deploying the low- cost concentrated winding technique, but with maintained performance both in terms of vibrations, noise as well as efficiency.

### Brief description of the drawings

The invention will now be described in more detail and with reference to the accompanying drawings, in which:
- Fig. 1 shows a cross-section of the electric synchronous motor 10 according to an exemplary embodiment of the present disclosure.
- Fig. 2 illustrates a view of one concentrically wound coil 14.

### Detailed description

In order to reduce stator manufacturing costs, the inventor has realised that the non-overlapping concentrated winding technique is advantageous. However, concentrated motor windings give uprise to higher harmonic content, resulting in increased losses, vibrations and noise.

The conventional 2-pole rotor has been tested in combination with a stator deploying a concentrated winding, comprising 3 coils. Apart from increased losses, unacceptable levels of vibrations, radial forces and noise were detected.

The 2-pole rotor is relatively simple to manufacture since a plurality of ring-shaped, anisotropic magnets can be assembled on a shaft, before machining to correct dimensions.

The 4-pole rotor however, requires at least 4 peripheral segments for one magnet ring. The complexity and cost of such a rotor is much higher, but allows re-optimization of the cross-sectional geometry with increased torque performance of up to 80 %.

However, the overlapping winding of a 4-pole design comprises 6 windings, and is very complex to assemble. The quality is thus further reduced, with increased costs as consequence.

The present disclosure relates to the usage of three concentrically wound coils, assembled in a non-overlapping arrangement to operate a rotor with two pairs of circumferential polar alternations. This is possible since the three concentrically wound coils generate several harmonic components, of which one is the 4-pole magnetic field. The drawback of the technique is a 30 % loss in torque performance, compared to an overlapping stator winding. However, the concentrated winding technique enables significantly shorter end-windings, which either reduces the motor size, or increases the active motor length, resulting in a payback in the torque/volume ratio. Further, the level of vibrations, noise and radial forces for the combination of three concentrically wound coils, and a rotor with two pairs of circumferential polar alternations are sufficiently low from a power tool point of view.

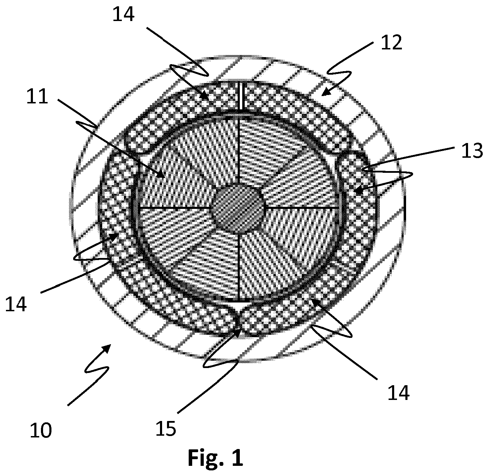

Figure 1 illustrates an exemplary embodiment of an electric synchronous motor 10 for an electrical power tool according to the present disclosure. As can be seen in figure 1, the electric synchronous motor 10 comprises a tubular rotor 11 magnetized to have circumferential polar alternations. Further the electric synchronous motor 10 comprises a tubular slotless stator yoke 12 of ferromagnetic material. The tubular rotor 11 is magnetized to have two pairs of circumferential polar alternations. Yet further the electric synchronous motor 10 comprises a stator 13 with three concentrically wound coils 14, wherein the three concentrically wound coils 14 are assembled in a non-overlapping fashion inside the tubular stator yoke 12 to form a concentrated motor winding.

According to one exemplary embodiment the tubular rotor 11 is made of anisotropic rare-earth magnets (magnets with a preferred magnetization direction) in order to maximize the motor torque performance. According to one exemplary embodiment the two pairs of circumferential polar alternations requires the use of at least 4 circumferential anisotropic magnet pieces. According to another exemplary embodiment the two pairs of circumferential polar alternations requires the use of a multiple of 4, such 8, circumferential anisotropic magnet pieces.

According to one exemplary embodiment, the non-overlapping concentrated winding is characterized by a coil arrangement in which each coil can be inserted individually (in contrast to its conventional counterpart, the full-pitch overlapping winding), thus significantly simplifying the assembly process. According to one another exemplary embodiment of the electric synchronous motor 10, the three concentrically wound coils 14 are symmetrically distributed inside the stator yoke 12.

According to one exemplary embodiment the tubular slotless stator yoke 12 is made of so-called "electrical steel" in order to maximize torque performance. According to one another exemplary embodiment the tubular slotless stator yoke 12 is made of a plurality of thin metal sheets, axially stacked to form the tubular stator yoke.

In another exemplary embodiment of the electric synchronous motor 10, the three concentrically wound coils 14 are arranged in a self-supporting manner. In one exemplary embodiment of the electric synchronous motor 10 the three concentrically wound coils 14 are fixed by vacuum impregnation of a synthetic resin, followed by curing to final shape and position.

In a further exemplary embodiment of the electric synchronous motor 10, the diameter of the tubular rotor 11 is larger than 50 percent of the outer diameter of the tubular slotless stator yoke 12. One advantage with this embodiment is increased efficiency.

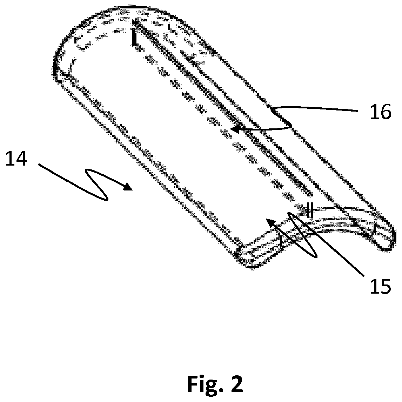

Figure 2 illustrates a view of one concentrically wound coil 14. In one exemplary embodiment of the electric synchronous motor 10, the three concentrically wound coils 14 are surrounded by an isolating material 15. According to one exemplary embodiment of the electric synchronous motor 10 the isolating material 15 is a polyester-based electrical insulation paper sheet, providing mechanical support during the assembly of the winding. Another advantage with the polyester-based electrical insulation paper sheet is that it satisfies the electrical insulation requirements.

Figure 2 further illustrates a bobbin 16. In a further exemplary embodiment of the electric synchronous motor 10, the three concentrically wound coils 14 are wound on the bobbins 16. An advantage of winding the three coils 14 on the bobbins 16 is that the bobbins not only simplifies the coil manufacturing, but the winding assembly as well.

In a yet further exemplary embodiment of the electric synchronous motor 10, the bobbins 16 are glued on the insulating material 15. An advantage with gluing the bobbins 16 on the insulating material 15 is that not only simplifies the coil manufacturing, but the winding assembly as well.

In a further exemplary embodiment of the electric synchronous motor 10, the tubular slotless stator yoke 12 comprises a stack of axially laminated metal sheets. In a further exemplary embodiment of the electric synchronous motor 10, the tubular slotless stator yoke 12 comprises a plurality of axially stacked metal sheet rings, mechanically supported by peripheral welding seams. In one exemplary embodiment of the electric synchronous motor 10 the peripheral welding seams are symmetrically distributed.

According to another exemplary embodiment of the electric synchronous motor 10, the three concentrically wound coils 14 are glued on the isolating material 15. One advantage with this embodiment is that it enables simplified series manufacturing of the concentrically wound coils **14.**

In another exemplary embodiment of the electric synchronous motor 10, the tubular slotless stator yoke 12 is segmented into three equal pieces. One advantage with such a modular assembly is that it enables simplified automated manufacturing of the equal pieces.

In a further exemplary embodiment of the electric synchronous motor 10 the three concentrically wound coils 14 are glued on the inside of each piece of stator yoke segment.

## Claims

1. An electric synchronous motor (10) for an electrical power tool, comprising **a:**
- tubular rotor (11) magnetized to have circumferential polar alternations;
- a tubular slotless stator yoke (12) of ferromagnetic material, wherein
- the tubular rotor (11) is magnetized to have two pairs of circumferential polar alternations and wherein
- a stator (13) comprises three concentrically wound coils (14), wherein the three concentrically wound coils (14) are assembled in a non-overlapping fashion inside the tubular stator yoke (12) to form a concentrated motor winding, wherein the three concentrically wound coils (14) are winded on three equally distributed bobbins (16), **characterized in that**
the three concentrically wound coils (14) are arranged in a self-supporting manner and **in that** the three concentrically wound coils (14) are surrounded by an isolating material (15) and that three concentrically wound coils (14) and the three equally distributed bobbins (16) are glued to the insulating material (15).

2. The electric synchronous motor (10) according to claim 1, wherein the three concentrically wound coils (14) are symmetrically distributed inside the stator yoke (12).

3. The electric synchronous motor (10) according to any of claims 1 or 2, wherein the diameter of the tubular rotor (11) is larger than 50 percent of the outer diameter of the tubular slotless stator yoke (12).

4. The electric synchronous motor (10) according to any of claims 1 to 3, wherein the tubular slotless stator yoke (12) comprises stacked metal sheets.

5. The electric synchronous motor (10) according to any of claims 1 to 6, wherein the tubular slotless stator yoke (12) are segmented into three equal pieces.

6. The electric synchronous motor (10) according to claim 5, wherein the three concentrically wound coils (14) are glued on the inside of each piece of stator yoke segment.

7. The electric synchronous motor (10) according to claim 1, wherein the isolating material (15) is a polyester-based electrical insulation paper sheet for providing mechanical support during assembly of the winding.

## Patentansprüche

1. Elektrischer Synchronmotor (10) für ein Elektrowerkzeug, umfassend:
- einen röhrenförmigen Rotor (11), der magnetisiert ist, um Umfangspolarwechsel aufzuweisen;
- ein röhrenförmiges schlitzloses Statorjoch (12) aus ferromagnetischem Material, wobei
- der röhrenförmige Rotor (11) magnetisiert ist, um zwei Paare von Umfangspolarwechseln aufzuweisen, und wobei
- ein Stator (13) drei konzentrisch gewickelte Spulen (14) umfasst, wobei die drei konzentrisch gewickelten Spulen (14) auf eine nicht überlappende Weise innerhalb des röhrenförmigen Statorjochs (12) montiert sind, um eine konzentrierte Motorwicklung auszubilden, wobei die drei konzentrisch gewickelten Spulen (14) auf drei gleichmäßig verteilte Spulenkörper (16) gewickelt sind,
**dadurch gekennzeichnet, dass**
die drei konzentrisch gewickelten Spulen (14) auf eine selbstunterstützende Art angeordnet sind und **dass** die drei konzentrisch gewickelten Spulen (14) von einem Isoliermaterial (15) umgeben sind und **dass** die drei konzentrisch gewickelten Spulen (14) und die drei gleichmäßig verteilten Spulenkörper (16) an das Isoliermaterial (15) geklebt sind.

2. Elektrischer Synchronmotor (10) nach Anspruch 1, wobei die drei konzentrisch gewickelten Spulen (14) innerhalb des Statorjochs (12) symmetrisch verteilt sind.

3. Elektrischer Synchronmotor (10) nach einem der Ansprüche 1 oder 2, wobei der Durchmesser des röhrenförmigen Rotors (11) größer als 50 Prozent des Außendurchmessers des röhrenförmigen schlitzlosen Statorjochs (12) ist.

4. Elektrischer Synchronmotor (10) nach einem der Ansprüche 1 bis 3, wobei das röhrenförmige schlitzlose Statorjoch (12) gestapelte Metallbleche umfasst.

5. Elektrischer Synchronmotor (10) nach einem der Ansprüche 1 bis 6, wobei das röhrenförmige schlitzlose Statorjoch (12) in drei gleiche Stücke segmentiert ist.

6. Elektrischer Synchronmotor (10) nach Anspruch 5, wobei die drei konzentrisch gewickelten Spulen (14) auf die Innenseite jedes Stücks des Statorjochsegments geklebt sind.

7. Elektrischer Synchronmotor (10) nach Anspruch 1, wobei das Isoliermaterial (15) ein polyesterbasiertes elektrisches Isolierpapierblatt zum Bereitstellen von mechanischer Unterstützung während einer Montage der Wicklung ist.

## Revendications

1. Moteur synchrone électrique (10) destiné à un outil motorisé électrique, comprenant :
- un rotor tubulaire (11) magnétisé pour avoir des alternances polaires circonférentielles ;
- une culasse de stator (12) tubulaire sans fente de matériau ferromagnétique, dans lequel
- le rotor tubulaire (11) est magnétisé pour avoir deux paires d'alternances polaires circonférentielles et dans lequel
- un stator (13) comprend trois bobines enroulées concentriquement (14), dans lequel les trois bobines enroulées concentriquement (14) sont assemblées d'une façon sans chevauchement à l'intérieur de la culasse de stator (12) tubulaire pour former un enroulement de moteur concentré, dans lequel les trois bobines enroulées concentriquement (14) sont enroulées sur trois bobines réparties de manière égale (16), **caractérisé en ce que**
les trois bobines enroulées concentriquement (14) sont agencées de manière autoportante et **en ce que** les trois bobines enroulées concentriquement (14) sont entourées par un matériau isolant (15) et **en ce que** trois bobines enroulées concentriquement (14) et les trois bobines réparties de manière égale (16) sont collées au matériau isolant (15).

2. Moteur synchrone électrique (10) selon la revendication 1, dans lequel les trois bobines enroulées concentriquement (14) sont symétriquement réparties à l'intérieur de la culasse de stator (12).

3. Moteur synchrone électrique (10) selon l'une quelconque des revendications 1 ou 2, dans lequel le diamètre du rotor tubulaire (11) est plus grand que 50 pour cent du diamètre externe de la culasse de stator (12) tubulaire sans fente.

4. Moteur synchrone électrique (10) selon l'une quelconque des revendications 1 à 3, dans lequel la culasse de stator (12) tubulaire sans fente comprend des feuilles métalliques empilées.

5. Moteur synchrone électrique (10) selon l'une quelconque des revendications 1 à 6, dans lequel la culasse de stator (12) tubulaire sans fente est segmentée en trois pièces égales.

6. Moteur synchrone électrique (10) selon la revendication 5, dans lequel les trois bobines enroulées concentriquement (14) sont collées sur l'intérieur de chaque pièce de segment de culasse de stator.

7. Moteur synchrone électrique (10) selon la revendication 1, dans lequel le matériau isolant (15) est une feuille de papier isolant électrique à base de polyester permettant de fournir un support mécanique pendant l'assemblage de l'enroulement.
